Europäisches Patentamt

European Patent Office

Office européen des brevets

(19)

(11) Numéro de publication: **0 143 055 B1**

(12) **FASCICULE DE BREVET EUROPEEN**

(45) Date de publication du fascicule du brevet:
15.07.87

(51) Int. Cl.⁴: **E 04 D 3/08**, A 01 G 9/14

(21) Numéro de dépôt: **84402354.9**

(22) Date de dépôt: **19.11.84**

(54) Structure porteuse formant arêtier de rive pour une charpente de toiture.

(30) Priorité: **23.11.83 FR 8318629**

(43) Date de publication de la demande:
**29.05.85 Bulletin 85/22**

(45) Mention de la délivrance du brevet:
**15.07.87 Bulletin 87/29**

(84) Etats contractants désignés:
**CH DE GB IT LI**

(56) Documents cités:
**EP - A - 0 075 509**
**FR - A - 2 324 847**
**FR - A - 2 501 258**

(73) Titulaire: **TECHNAL (S.N.C.), 270, rue Léon Joulin,
F-31037 Toulouse Cédex (FR)**

(72) Inventeur: **Cavalie, Jean-François, Chemin des Clottes,
F-81600 Gaillac (FR)**
Inventeur: **Luvisutto, Jean-Marc, 55, rue Edmond
Rostand, F-31200 Toulouse (FR)**

(74) Mandataire: **Martin, Jean-Jacques et al, Cabinet
REGIMBEAU 26, Avenue Kléber, F-75116 Paris (FR)**

ACTORUM AG

## Description

La présente invention concerne les charpentes destinées à soutenir la couverture ou toiture d'une construction.

La présente invention concerne plus précisément une structure porteuse métallique, formant arêtier de rive, pour une charpente de toiture.

On appelle «arêtier de rive» la pièce qui permet de terminer latéralement une toiture.

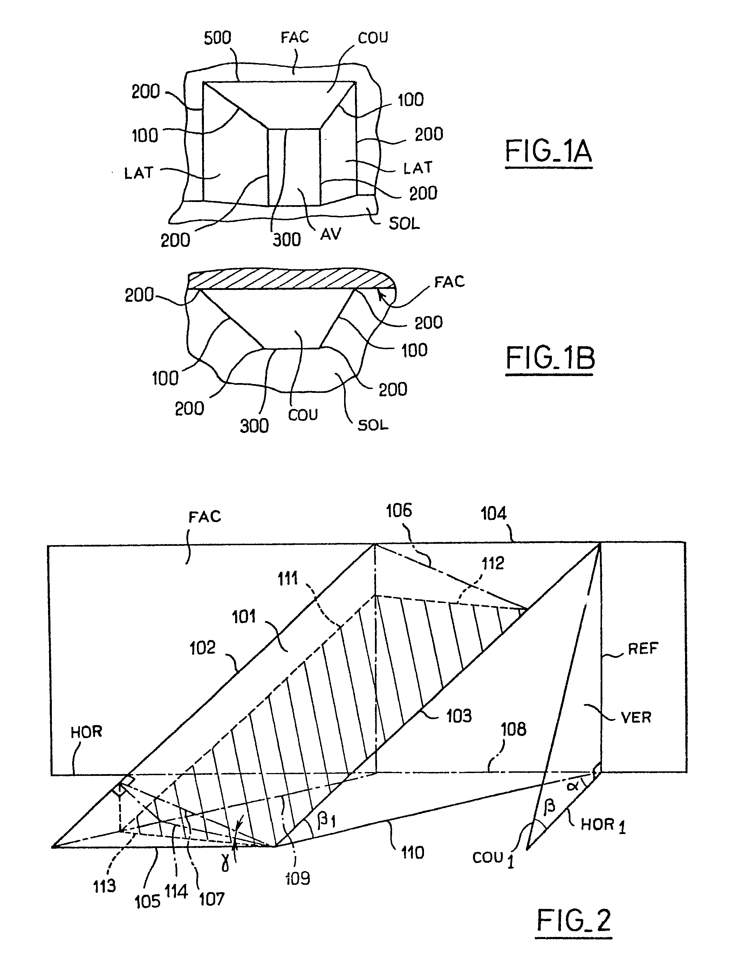

A titre d'illustration, les arêtiers de rive sont référencés 100 sur les figures 1A et 1B annexées qui représentent respectivement une vue schématique en perspective d'une véranda, et la projection au sol de celle-ci.

Par ailleurs, sur les figures 1A et 1B on a référencé FAC la façade d'appui généralement verticale de la véranda, SOL le sol généralement horizontal et COU la couverture ou toiture de la véranda. En l'espèce, cette couverture est formé d'un pan unique qui se raccorde horizontalement sur la façade d'appui FAC.

En outre, sur les figures 1A et 1B on a référencé AV la face avant de la véranda, généralement verticale et parallèle à la façade d'appui FAC, et LAT les parois latérales de la véranda reliant la façade d'appui FAC et la face avant AV. Enfin, un cheneau porteur formant l'extrémité supérieure de la face avant AV et supportant les chevrons de la toiture (non représentés sur les figures 1A et 1B) est référencé 300 sur les figures 1A et 1B, tandis que des montants verticaux sont référencés 200.

L'invention concerne tout particulièrement les arêtiers de rive 100 qui sont inclinés sur la ligne de pente de la toiture, étant entendu que l'on appelle «ligne de pente» la droite qui fait le plus grand angle avec un plan horizontal. Toutefois, comme cela sera précisé par la suite, l'invention ne se limite aucunement à une telle application.

De plus, dans la description, on appellera ligne de niveau, toute ligne de la toiture perpendiculaire aux lignes de pente et donc, horizontale.

Les systèmes utilisés jusqu'ici pour former les arêtes de rive sont des systèmes fixes n'autorisant qu'une position d'installation prédéterminée, et dont la mise en œuvre, ou l'usinage, compte-tenu notamment des nombreux réglages imposés, doit être faite sur un chantier.

On a proposé par exemple des systèmes en bois formant arêtier de rive. Toutefois, les angles d'usinage de ces systèmes, qui déterminent la géométrie de la toiture, sont nécessairement fixés lors de la conception, et ne peuvent donc s'adapter à toutes les situations de pose. Par ailleurs, les usinages de tels systèmes doivent être exécutés directement sur chantier ce qui entraîne inévitablement certains risques d'erreurs et des pertes de temps. Ces systèmes ne permettent pas en outre de corriger certains défauts de montage, inhérents à toute construction et posent des problèmes complexes en ce qui concerne l'étanchéité. On a également proposé des systèmes métalliques formant arêtiers de rive. Les inconvénients présentés par de tels systèmes métalliques sont généralement du même ordre que ceux précédemment évoqués pour les systèmes en bois. On notera cependant que pour les systèmes métalliques l'assemblage est en général réalisé à l'aide de pièces mécano-soudés ou de fixations boulonnées ou rivetées.

Les diverses systèmes jusqu'ici proposés imposaient par conséquent des temps de pose particulièrement longs, nécessitant dans tous les cas un usinage sur chantier, qui devait pour donner satisfaction être opéré par du personnel spécialisé. De plus, les techniques classiques interdisaient toute standardisation dans la production des éléments formant arêtiers de rive, puisque ceux-ci devaient être adaptés en fonction de chaque cas.

La présente invention vient maintenant apporter une solution au problème ainsi posé, en proposant un nouveau type de structure porteuse formant arêtier de rive adaptable à tout type de charpente de toiture, quelle que soit la pente de celle-ci, qui soit à la fois simple, robuste et économique, tout en autorisant une étanchéité parfaite, et qui offre la possibilité d'être installé rapidement par du personnel non spécialisé.

Un autre but important de la présente invention est de proposer des structures porteuses formant arêtier de rive, qui soient standardisées et ce quelles que soient d'une part la pente de la toiture, d'autre part l'inclinaison de l'arêtier de rive par rapport à la ligne de pente.

Un autre but important de la présente invention est de proposer un arêtier de rive apte à supporter correctement les chevrons de la toiture, quelles que soient, comme cela a été précédemment évoqué, d'une part la pente, d'autre part l'inclinaison de l'arêtier de rive par rapport à la ligne de pente.

Pour cela la structure porteuse conforme à l'invention comprend en combinaison un profilé support équipé d'un premier élément longitudinal d'articulation, et adapté pour être fixé à des montants portant la charpente, selon une inclinaison par rapport à l'horizontale qui correspond à la déclivité de la toiture considérée sensiblement dans un plan vertical délimité par le bord latéral de la toiture, ainsi qu'un arêtier de rive constitué d'un profilé comprenant un voile généralement plan muni sur sa surface inférieure d'un second élément longitudinal d'articulation adapté pour venir en engagement avec le premier élément d'articulation afin de permettre une inclinaison du voile de l'arêtier de rive par rapport à l'horizontale en fonction d'une part de la pente de la toiture et d'autre part de l'inclinaison de l'arêtier de rive par rapport à la ligne de pente de la toiture.

Cette structure permet de supporter correctement les chevrons, grâce au fait que l'arêtier de rive présente une surface d'appui orientable et adaptée pour être située sur le même plan que les autres organes supports de chevrons, tels que le cheneau porteur, définissant la pente de la toiture.

La demanderesse a déterminé en effet que, dans un grand nombre de cas de pose, la surface d'appui précitée de l'arêtier de rive, doit être inclinée sur l'horizontale non seulement dans le sens de sa direction longitudinale, en fonction de la pente de la toiture et de l'inclinaison par rapport à la ligne de pente, mais également dans le sens de sa direction transversale.

Or précisément, le calcul de l'angle γ d'inclinaison

par rapport à l'horizontale de la surface d'appui de l'arêtier considérée dans la direction transversale de celle-ci, est fort complexe.

La Demanderesse a déterminé que l'angle γ précité considéré dans un plan perpendiculaire au voile de l'arêtier de rive peut être calculé par la relation suivante:

$$\gamma = \text{arctg} \, [\text{tg} \, \alpha \sin \text{arctg} \, (\text{tg} \, \beta \cos \alpha)]$$

relation dans laquelle α désigne l'angle d'inclinaison de la projection sur un plan horizontal de la direction longitudinale de l'arêtier de rive par rapport à la projection sur un plan horizontal de la ligne de pente de la toiture, et β désigne la pente de cette toiture considérée par rapport à l'horizontale.

On remarquera de plus que d'un côté latéral à l'autre de la charpente, l'angle γ peut varier si l'inclinaison des arêtiers de rive respectifs, sur la ligne de pente, diffère entre ces côtes.

Par ailleurs, on remarquera que bien que la projection sur un plan horizontal de la direction longitudinale des arêtiers de rive soit perpendiculaire à la façade d'appui, l'angle γ n'est pas nul lorsque les lignes de niveau ne sont parallèles à la face d'appui. Dans un tel cas en effet, l'arêtier de rive n'est pas parallèle à la ligne de pente. De ce fait, les angles γ formés par rapport à l'horizontale par les arêtiers de rive situés de part et d'autre de la toiture, ne sont pas égaux, puisque par exemple si l'une des surfaces d'appui est dirigée vers le bas, l'autre est dirigée vers le haut. Enfin, les valeurs de ces angles peuvent varier d'un côté à l'autre de la toiture, lorsque celle-ci présente plusieurs pans non coplanaires s'intersectant.

Selon l'invention, le réglage de l'arêtier de rive est simple. L'inclinaison de celui-ci, par rapport à la verticale, dans la direction longitudinale, est assurée par réglage du profilé support. L'inclination dans la direction transversale est assurée par simple pivotement autour des moyens d'articulation.

Selon une caractéristique avantageuse de la présente invention, la structure porteuse comporte au moins deux montants portant le profilé support, qui sont composés chacun de deux profilés articulés autour d'un axe parallèle à la direction des montants de telle sorte que l'un des éléments de chaque montant délimite une face d'appui pour le profilé support, qui est orientée transversalement à la direction longitudinale de l'arêtier.

De préférence, l'un des deux éléments longitudinaux d'articulation prévus sur la structure porteuse comprend un organe profilé comportant un bourrelet de contour externe généralement convexe avec un resserrement au niveau duquel son épaisseur horstout, en section droite, est minimale, et l'autre élément d'articulation comprend un logement en creux à bords convergents, l'orifice ménagé entre ces bords permettant l'introduction du bourrelet présenté sensiblement selon son épaisseur minimale dans une position dite d'introduction, tandis qu'après pivotement en position dite de travail, le bourrelet est prisonnier dans le logement, et susceptible d'un pivotement relatif à l'égard de ce logement.

De façon avantageuse, le bourrelet des éléments d'articulation est muni d'un orifice axial apte à recevoir une vis.

Selon une autre caractéristique avantageuse de la présente invention, le voile de l'arêtier de rive porte sur sa surface supérieure une rainure à bords convergents.

Selon une autre caractéristique avantageuse de l'invention, le profilé support est constitué en combinaison d'un longeron support de section droite généralement quadrangulaire et d'un profilé sensiblement plan destiné à être fixé sur celui-ci, qui est muni dudit premier élément longitudinal d'articulation. De préférence, dans un tel cas, le longeron support possède un voile supérieur muni d'une rainure en queue d'aronde à bords convergents, ouverte vers le haut après installation, pour autoriser la fixation dudit profilé muni du premier élément longitudinal d'articulation.

Selon une autre caractéristique avantageuse de la présente invention, le profilé support, comprenant le cas échéant un longeron, possède un voile inférieur muni d'une rainure en queue d'aronde à bords convergents ouverte vers le bas après installation. Cette rainure pourra être utilisée pour la fixation de tout type d'accessoire approprié.

Selon une autre caractéristique de la présente invention, le profilé support et l'arêtier de rive comprennent des ailes respectives en forme de secteur de cylindre, en contact mutuel.

D'autres caractéristiques et avantages de la présente invention apparaîtrons à la lecture de la description détaillée qui va suivre, et en regard des dessins annexés, donnés à titre d'exemple non limitatifs et sur lesquels, les figures 1A et 1B ayant déjà été décrites:

la figure 2 illustre schématiquement la position d'intallation d'une structure porteuse conforme à la présente invention, afin d'expliciter le concert de celle-ci,

les figures 3A et 3B représentent en section droite un profilé support et un arêtier de rive adaptés pour coopérer, conformes à une première variante de réalisation de la présente invention, la figure 3C représente ces éléments, en position de coopération,

les figures 4A et 4B représentent respectivement en section droite un élément d'un profilé support et un arêtier de rive conformes à une seconde variante de réalisation de la présente invention,

la figure 4C représente en section droite ces mêmes éléments, en position de coopération,

la figure 5 représente une vue composite de dessus d'une extrémité latérale d'une charpente comportant un arêtier de rive conforme à l'invention,

la figure 6 représente une vue composite latérale, en perspective de la même charpente.

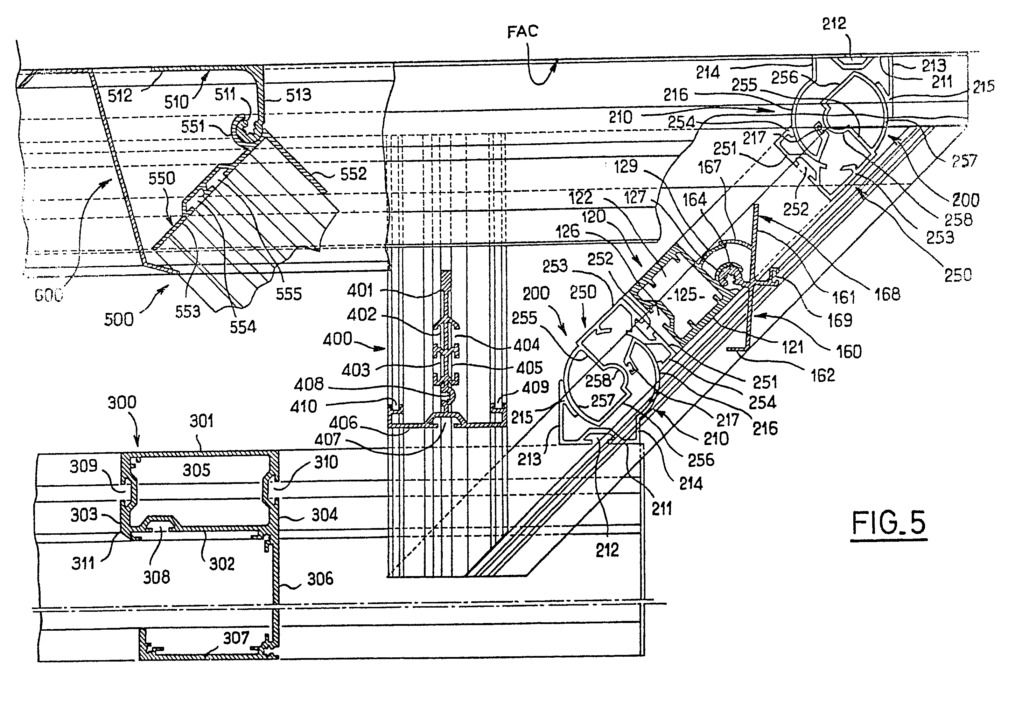

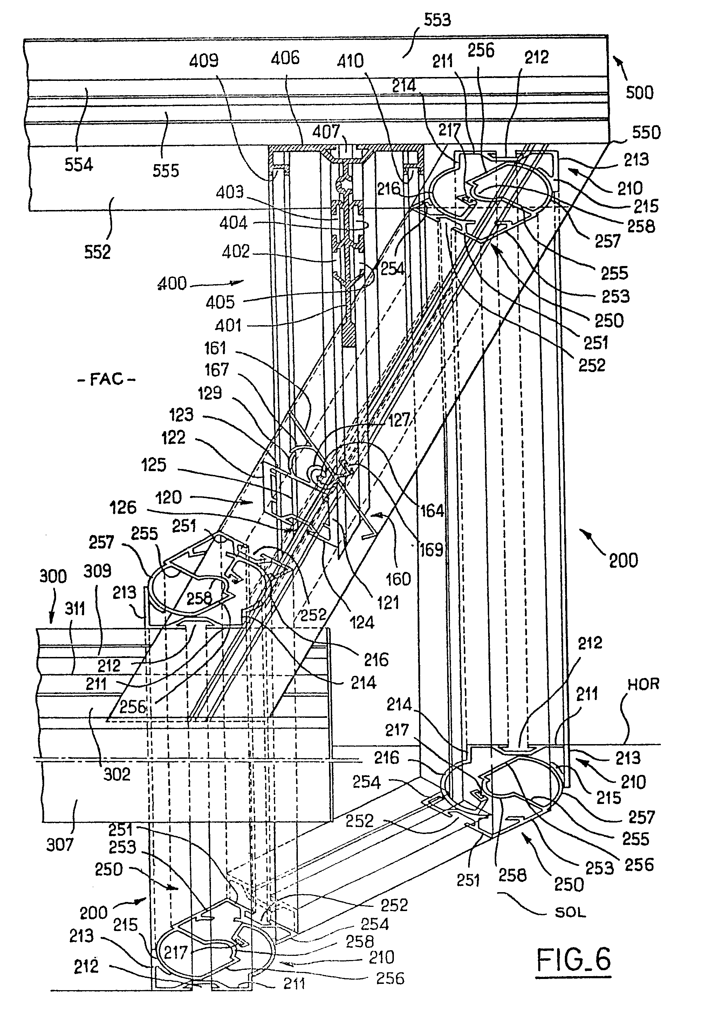

Comme cela sera précisé par la suite, on entend par vue composite une vue sur laquelle les éléments sont représentés non seulement sous leur aspect défini par les angles d'observation précités, mais également pour certains d'entre eux, afin notamment d'expliciter leur géométrie, en section droite. Plus précisément, ces dites sections droites sont superposées à la représentation des éléments. Plus précisément encore, ces sections sont représentées par les zones hachurées en traits serrés apparaissant sur les figures 5 et 6.

On va dans un premier temps décrire la figure 2 qui explicite les problèmes rencontrés lors de l'installation des arêtiers de rive.

Sur cette figure, on a référencé FAC, de façon comparable aux figures 1A et 1B une façade d'appui plane et verticale. La référence HOR illustre une droite horizontale, tandis qu'un plan vertical perpendiculaire à la façade d'appui FAC précitée est référencé VER.

De plus, pour simplifier l'explication, on supposera que les lignes de niveau de la toiture sont parallèles à la façade d'appui FAC. Dans ces conditions, la pente de la toiture est illustrée par l'angle $\beta$ considéré dans le plan vertical VER perpendiculaire à la façade FAC, délimitant l'inclinaison entre le plan de la toiture illustré par la ligne référencée $COU_1$ et une ligne horizontale référencée $HOR_1$.

On a représenté en outre sur la figure 2 une surface d'appui 101 de l'arêtier de rive 100. Cette surface d'appui 101 est délimitée d'une part longitudinalement par deux arêtes rectilignes 102, 103 parallèles entre elles et coplanaires à la droite $COU_1$ précitée, d'autre part par deux rectilignes 104, 105 respectivement supérieure et inférieure, parallèles entre elles, et horizontales, ces arêtes 104 et 105 étant inclinées sur les arêtes longitudinales 102 et 103 précitées.

Par ailleurs, la direction transversale de la surface d'appui 101, perpendiculaire aux arêtes 102 et 103 est illustrée par les traits interrompus référencés 106 et 107 sur la figure 2.

La projection sur un plan horizontal de la surface d'appui 101 précitée est constituée par un cadre délimité d'une part par l'arête rectiligne 105 et par l'arête rectiligne 108 qui lui est parallèle et parallèle à l'arête 104, et d'autre part par les arêtes rectilignes 109 et 110 correspondant respectivement aux projections des arêtes 102 et 103.

Enfin, on a représenté sous forme d'une zone hâchurée, une surface délimitée d'une part par l'arête 103 et par une arête 111 parallèle à celle-ci et à l'arête rectiligne 102 précitée, d'autre part par des arêtes rectilignes 112 et 113, horizontales, perpendiculaires aux arêtes 103 et 111, et correspondant respectivement aux projections sur l'horizontale des directions transversales 106 et 107 précédemment définies de la surface d'appui 101.

L'inclinaison de la projection 110 sur l'horizontale de la direction longitudinale 102, 103 de la surface d'appui 101 par rapport à la projection sur l'horizontale de la ligne de pente $COU_1$, c'est-à-dire en l'espèce par rapport à l'horizontale $HOR_1$ est définie par l'angle référencé $\alpha$ sur la figure 2.

Il apparaît clairement à l'examen de la figure 2 que la surface d'appui 101 est inclinée, en considérant sa direction longitudinale définie par les arêtes 102 et 103 d'un angle $\beta_1$ par rapport à l'horizontale. Cet angle dépend de la pente $\beta$ par rapport à l'horizontale d'une part et de l'inclinaison $\alpha$ précédemment définie d'autre part, selon la relation

$$\beta_1 = \text{arctg (tg }\beta \text{ cos }\alpha).$$

Par ailleurs, l'examen de cette figure 2 montre que la direction transversale de la surface d'appui 101 illustrée par les génératrices référencées 106 et 107 est inclinée sur l'horizontale d'un angle $\gamma$ qui dépend de la pente $\beta$, et de la valeur de l'inclinaison $\alpha$ précédemment définie.

Comme cela a été précédemment évoqué, l'angle $\gamma$ représentant l'inclinaison sur l'horizontale de la direction transversale de la surface d'appui 101 des arêtiers de rive considérés dans un plan perpendiculaire au voile de l'arêtiers de rive est défini par la relation:

$$\gamma = \text{arctg [tg }\alpha \text{ sin arctg (tg }\beta \text{ cos }\alpha)].$$

En d'autres termes, l'angle $\gamma$ est considéré entre le segment 107 représentant la direction transversale de la surface d'appui de l'arêtier et le segment horizontale 114 contenu dans un plan, perpendiculaire à ladite surface d'appui, passant par le segment 107 précité.

La présente invention permet quelle que soit la valeur des angles $\alpha$ et $\beta$ d'assurer un positionnement correct de la surface d'appui de l'arêtier de rive, apte à supporter de façon satisfaisante les chevrons de la toiture et permettant donc, pour cela de respecter avec précision la valeur théorique de l'angle $\gamma$ précité.

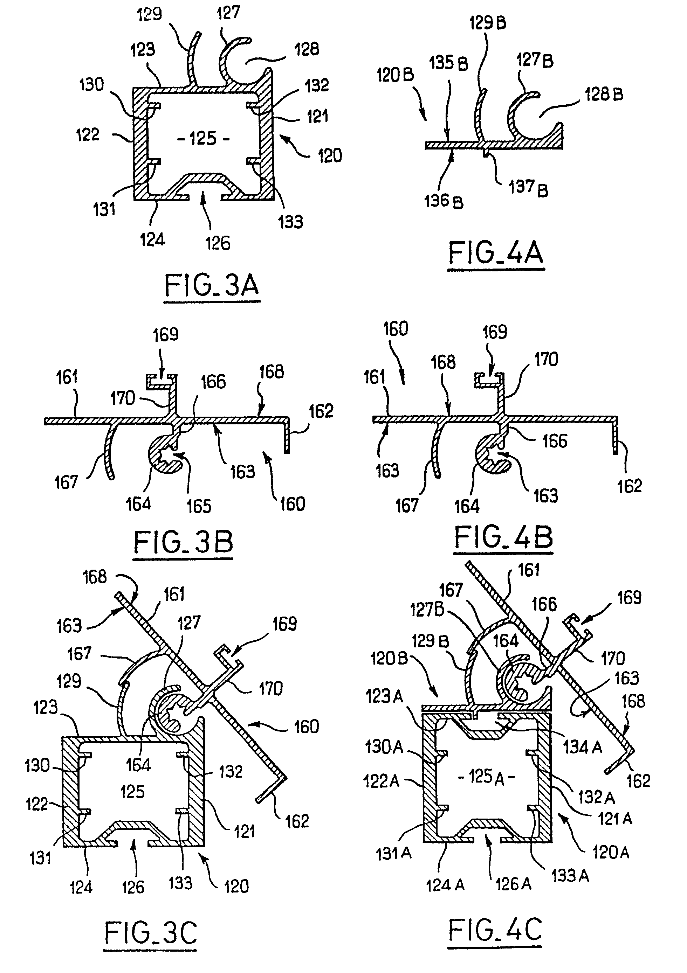

On va maintenant décrire la structure du profilé support 120 représenté sur la figure 3A et de l'arêtier de rive 160 représenté sur la figure 3B, qui sont adaptés pour coopérer par engagement comme représenté sur la figure 3C.

Le profilé support 120 représenté sur la figure 3A en section droite se compose de deux toiles parallèles verticales 121, 122 reliées entre elles à leurs extrémités par deux parois horizontales 123, 124 respectivement supérieure et inférieure, qui leur sont perpendiculaires de façon à définir entre ces différentes cloisons une chambre 125.

La paroi horizontale inférieure possède avantageusement une rainure 126 à bords convergents, de section droite en forme de queue d'aronde ouverte vers l'extérieur de la chambre 125, vers le bas en position installée du profilé support.

La paroi horizontale supérieure 123 possède au voisinage de l'une de ses arêtes une saillie 127 incurvée délimitant un logement 128 en creux à bords convergents. La surface interne de ce logement en creux 128 est plus précisément délimitée par un secteur de cylindre supérieur à un demi-cylindre. L'orifice ménagé entre les bords de ce logement 128 est orienté vers l'extérieur du profilé, selon un angle de l'ordre de 45° par rapport au plan de la paroi horizontale supérieure 123.

La paroi horizontale supérieure 123 possède par ailleurs, à distance de la saillie 127 précitée une aile 129 en forme de secteur cylindrique. Cette aile 129 possède un rayon de courbure plus important que celui du logement 128 précité. Toutefois, le centre du secteur cylindrique 129 et du logement 128 sont confondus.

Enfin, on aperçoit sur la figure 3A des paires de saillies 130, 131 d'une part et 132, 133 d'autre part ménagées sur chacune des toiles verticales 121, 122 sur l'intérieur de la chambre 125.

Ces saillies sont destinées à positionner tout type d'accessoire approprié à l'intérieur de la chambre 125, tel que par exemple des embouts de jonction adaptés pour assurer la fixation du profilé support 120 sur des montants transversaux. De tels embouts de jonction sont par exemple décrits dans les brevets français publiés sous les numéros FR-A-2 424 434 ou FR-A-1 380 505.

L'arêtier de rive 160 représenté sur la figure 3B comprend un voile 161 généralement plan muni le long de l'une de ses arêts d'un renvoi à 90° référencé 162. La surface inférieure 163 de l'arêtier de rive 160 comporte un bourrelet 164 au contour externe généralement convexe avec un resserrement délimité par un secteur de cylindre supérieur à un demi-cylindre et par un méplat correspondant audit resserrement, L'épaisseur hors-tout en section droite du contour externe du bourrelet 164 est donc minimale au niveau de ce resserrement ou méplat.

Le bourrelet 164 est de plus muni d'un orifice axial 165 destiné à recevoir une vis. Cet orifice axial 165 possède une section droite en forme d'étoile comme cela apparaît sur la figure 3B. Bien entendu, cet orifice pourra prendre toute forme appropriée. Par ailleurs, cet orifice 165 pourra être réalisé soit lors de la fabrication du profilé support 160 et couvrir toute la longueur de celui-ci, soit être ménagé en extrémité dudit profilé, après sa fabrication et prendra alors la forme d'un orifice borgne.

L'orifice ménagé entre les bords du logement 128 est de dimension supérieure à l'épaisseur hors-tout minimale du contour externe du bourrelet 164, mais inférieure au diamètre de ce bourrelet, le diamètre interne du logement en creux 128 étant sensiblement supérieur à celui du même contour externe du bourrelet 164.

Il est ainsi possible d'introduire à l'intérieur du logement 128 le bourrelet 164, présenté sensiblement selon son épaisseur minimale en regard de l'orifice du logement 128, dans une position dite d'introduction, comme représentée sur la figure 3C.

Cette position dite d'introduction correspond donc à une plage étroite de position angulaire relative entre le bourrelet 164 et le logement 128, plage dans laquelle l'épaisseur hors-tout minimale du bourrelet 164 permet à celui-ci de pénétrer par translation dans le logement 128.

Le bourrelet 164 ayant ainsi pénétré à l'intérieur du logement 128, on emprisonne par simple pivotement relatif de l'arêtier de rive 160 et du profilé support 120, en position dite de travail, le bourrelet 164 à l'intérieur du logement 128, et donc l'arêtier de rive 160 par rapport au profilé support 120, tout en laissant ces éléments libres de pivotement relatif.

En l'espèce, la dimension hors-tout minimale du bourrelet 164 est définie dans un plan sensiblement parallèle au plan du voile 161.

Le bourrelet 164 est raccordée au voile 161 par une aile 166 limitant l'inclinaison relative de l'arêtier de rive 160 et du profilé support 120. La surface inférieure 163 du voile 161 possède également à distance du bourrelet 164 une aile incurvée 167 en forme de secteur de cylindre. Le rayon de courbure de cette aile 167 est sensiblement identique à celui de l'aile 129 précitée. Ainsi, quelle que soit l'inclinaison relative du profilé support 120 et de l'arêtier de rive 160 les ailes 129 et 167 sont en contact mutuel.

Enfin, la surfsce supérieure 160 du voile 161 est munie, sensiblement en regard du bourrelet 164 d'une rainure 169 à bords convergents raccordée au voile 161 par une aile perpendiculaire 170.

On va maintenant décrire la structure du profilé support représenté sur les figures 4A et 4C, conformément à une seconde variante de réalisation de l'invention. L'arêtier de rive 160 destiné à coopérer avec ce profilé support est identique à celui de la figure 3B et ne sera donc pas décrit à nouveau.

Par ailleurs, les éléments du profilé support représenté sur les figures 4A et 4C fonctionnellement équivalents à ceux du profilé support représenté sur les figures 3A et 3C porteront des références numériques identiques assorties d'un indice A ou B.

En effet, le profilé support représenté sur les figures 4A et 4C est constitué en combinaison d'un longeron support $120_A$ de section générale quadrangulaire et d'un profilé $120_B$ sensiblement plan destiné à être fixé sur celui-ci et qui définit un logement $128_B$ identique au logement 128 précité. L'indice A sera utilisé pour le longeron $120_A$ et l'indice B pour le profilé.

Plus précisement, le longeron support $120_A$ se compose de deux toiles parallèles verticales $121_A$ et $122_A$ reliées entre elles et à leurs extrémités par deux parois horizontales $123_A$ et $124_A$ qui leurs sont perpendiculaires de façon à définir entre ces différentes cloisons une chambre $125_A$. Les toiles verticales $121_A$ et $122_A$ sont munies de saillies $130_A$ à $133_A$. La paroi horizontale inférieure $124_A$ est munie d'une rainure $126_A$ à bords convergents de section droite en forme de queue d'aronde ouverte vers l'extérieur de la chambre 125A.

De plus, conformément au second mode de réalisation, la paroi horizontale supérieure $123_A$ comporte une rainure 134A à bords convergents de section droite en forme de queue d'aronde, ouverte vers l'extérieur de la chambre $125_A$, et vers le haut. Cette rainure $134_A$ est destinée à permettre l'assemblage du profilé $120_B$.

Ce dernier est formé comme représenté sur la figure 4A d'un voile généralement plan qui porte sur sa surface supérieure $135_B$ d'une part une saillie $127_B$ en secteur de cylindre délimitant le logement $128_B$ précité, d'autre part une saillie incurvée $129_B$ similaire à la saillie 129 précédemment décrite. Le profilé $120_B$ est destiné à être fixé sur la paroi horizontale supérieure $123_A$ du longeron support $120_A$ à l'aide de tout moyen classique approprié engagé dans la rainure $134_A$. Pour faciliter un tel assemblage, comme représenté sur la figure 4C la surface inférieure $136_B$ du profilé $120_B$ est munie d'une saillie $137_B$ destinée à reposer, en position assemblée, contre l'un des bords de la rainure $134_A$.

On va maintenant décrire les figures 5 et 6 qui illustrent schématiquement une installation incorporant une structure porteuse conforme à l'invention.

Sur ces figures, de façon similaire aux figures 1A et 1B précédemment décrites, on a référencé FAC la façade d'appui de la construction, et SOL le sol. Pour simplifier la représentation, la façade d'appui FAC est considérée verticale et le sol SOL horizontal, l'intersection entre ces plans référencée HOR définissant l'horizontale.

Par ailleurs, on a considéré le cas où les lignes de niveau perpendiculaires aux lignes de pente de la toiture sont parallèles au plan de la façade d'appui FAC.

La charpente est supportée d'une part par des montants verticaux 200 d'autre part par une structure ajustable à pivotement référencée 500 qui est fixée sur la façade FAC. Cette structure ajustable à pivotement est identique à celle décrite dans la demande de brevet déposée en France par la demanderesse sous le numéro 8 025 561 et publiée sous le numéro FR-A-2 495 205.

Pour cette raison, cette structure ajustable 500 ne sera pas décrite en détail. On notera toutefois que cette structure ajustable se compose de deux pièces 510, 550 comportant respectivement un bourrelet 511 et un logement 551 similaires au borrelet 164 et au logement 128 précédemment décrits, pour autoriser un assemblage de ces éléments avec possibilité de réglage d'inclinaison. La pièce 510 est formée d'un profilé cornière de section droite en «L». L'une des ailes 512 de cette pièce est fixée sur la façade FAC et la seconde aile 513 est munie du bourrelet 511.

La seconde pièce 550 est également formée d'un profilé cornière, de section droite générale en «L». L'une des ailes 552 de cette seconde pièce est destinée à supporter des chevrons 400 inclinés dans le sens de la pente. La seconde aile 553, sensiblement perpendiculaire à la première, est munie au voisinage de son point de jonction avec celle-ci, et sur l'extérieur du «L» d'un organe délimitant le logement 551 précité. Par ailleurs, l'aile 553 est munie de deux rainures 554, 555 en forme de queue d'aronde destinées à recevoir des joints d'étanchéité ou des parcloses pour des prises de volume d'épaisseurs différentes.

Une bavette d'étanchéité 600 fixée sur la façade d'appui FAC, recouvre la structure ajustable à pivotement 500 qui vient d'être décrite.

Le cheneau porteur 300 délimitant l'arête supérieure de la face avant AV est horizontale et parallèle à la face d'appui FAC selon le mode de réalisation représenté.

Le cheneau porteur 300 se compose de deux toiles parallèles verticales 301, 302 reliées entre elles et à leurs extrémités par deux parois horizontales 303, 304 qui leurs sont perpendiculaires de façon à définir entre ces différentes cloisons une chambre 305.

La paroi horizontale inférieure 304 se prolonge horizontalement du côté de la toile verticale 302 précitée par une aile 306 qui possède elle-même à son extrémité une aile 307 en saillie vers le haut, parallèlement aux toiles 301, 302.

La toile verticale 302 d'une part et les parois horizontales supérieure 303 et inférieure 304 sont munies respectivement de rainures 308, 309 et 310 à bord convergents, de section droite en forme de queue d'aronde, ouverte vers l'extérieur de la chambre 305. Ces rainures 308 à 310 sont destinées à recevoir des accessoires ou systèmes d'assemblage appropriés.

Les ailes 306 et 307 forment avantageusement en coopération avec la toile 302 une gouttière.

Les chevrons 400 reposent par conséquent à leur extrémité supérieure sur l'aile 552 de la structure ajustable à pivotement 500, d'autre part à leur extrémité inférieure sur l'arête 311 correspondant à l'intersection de la toile 302 et de la paroi horizontale supérieure 303. L'assemblage des chevrons 400 sur le cheneau porteur 300 peut être réalisé avantageusement à l'aide du système de fixation décrit et représenté dans la demande de brevet en France déposée par la demanderesse sous le N° 8 205 567 et publiée sous le numéro FR-A-2 524 584.

Les chevrons 400 représentés sur les figures 5 et 6 sont avantageusement formés de profilés présentant en section droite une forme générale en T inversé. Lesdits chevrons profilés 400 sont formés d'une âme centrale 401 munie de part et d'autre de deux rainures 402, 403 et 404, 405 à bords convergents, en forme de queue d'aronde, destinées à recevoir de joints d'étanchéité ou parcloses. La base 406 des chevrons profilés 400 transversale à l'âme 401 précitée, et par laquelle les chevrons 400 sont destinés à venir reposer sur les ailes 552 de la structure ajustable à pivotement et sur l'arête 311 du cheneau porteur est également munie d'une rainure longitudinale 407 de section droite en queue d'aronde, à bords convergents, ouverte vers l'extérieur. Par ailleurs, la partie supérieure de l'âme centrale 401 est munie d'un épaissement qui peut être utilisé par exemple pour la fixation de bavettes d'étanchéité, tandis que l'âme centrale 401 est munie d'une structure 408 se présentant en section droite sous la forme d'un «C», pour l'assemblage par exemple de pièces d'étanchéité latérales ou de finition, en extrémité du chevron, à l'aide d'une vis engagée dans cette structure.

Enfin, des rainures à bords convergents 409 et 410, ouvertes vers le haut sont ménagées sur la base 406.

On va maintenant décrire la structure des montants 200 représentée sur les figures 5 et 6.

De préférence, comme cela est représenté sur ces figures, chacun des montants 200 se compose de deux profilés 210, 250 articulés. Le premier profilé 210 possède une aile 211 munie d'une rainure 212 à bords convergents de section droite en queue d'aronde, par l'intermédiaire desquelles cette pièce 210 est destinée à être fixée sur la façade d'appui FAC ou sur le cheneau porteur 300. L'aile 211 est munie de deux voiles 213, 214, parallèles entre eux et perpendiculaires à l'aile 211. Ces voiles 213 et 214 sont munis chacun d'une structure 215, 216 d'enveloppes cylindriques respectivement concave et convexe. Les rayons de courbure de ces structures 215 et 216 sont identiques et le centre des surfaces délimitant celles-ci est commun. La structure 216 présente un développement angulaire plus important que la structure 215 et se termine en extrémité par une rainure 217 à bords convergents, de section droite rectangulaire, ouverte radialement vers l'intérieur du profilé.

Le second profilé 250 comprend une aile 251 munie d'une rainure 252 à bords convergents de section droite en queue d'aronde, ouverte vers l'extérieur du profilé. L'aile 251 est munie de deux voiles 253, 254, parallèles entre eux et perpendiculaires à l'aile 251. L'un des voiles 253 de plus grande largeur se prolonge par un premier voile 255 parallèle à l'aile 251 et lui-même muni d'une toile 256 perpendiculaire à cette dernière en éloignement de celle-ci. Le voile 255 et la toile 256 sont reliés par un voile 257 en secteur de cylindre complémentaire de la structure 215 précitée. Par ailleurs, l'aile 251 et les voiles 253 et 254 délimitent des surfaces d'appui cylindriques concaves complémentaires de l'enveloppe de la structure 216 précitée. Le voile 255 possède par ailleurs une protubérance 258 en secteur de cylindre, sur laquelle repose de préférence un joint d'étanchéité (non représenté) engagé dans la rainure 217. Ce joint, en combinaison avec la chicane réalisée par assemblage des profilés 210 et 250 comme représentés sur les figures interdit la pénétration d'air à l'intérieur du bâtiment.

Les différentes pièces étant ainsi décrites on va maintenant préciser le processus d'installation de l'ensemble.

Il convient dans un premier temps de définir la valeur de la pente β de la toiture, la valeur de l'inclinaison de l'arêtier de rive par rapport à la ligne de pente de la toiture, et enfin l'inclinaison de la ligne de niveau de la toiture par rapport à la face d'appui FAC. Ces différents angles étant définis il convient de procéder à l'usinage des extrémités des différentes pièces, en particulier du profilé support 120 et de l'arêtier de rive 160, sur la base des relations précédemment données.

On notera que grâce à la structure des montants 200 précédemments décrite, les profilés 250 sont orientés de telle sorte que leurs ailes 251 respectives délimitent une face d'appui pour le profilé support 120 qui est orientée transversalement à la direction longitudinale de l'arêtier. Dans ces conditions, l'usinage de l'extrémité du profilé support 120 est limité à une découpe de ses extrémités selon des plans inclinés par rapport à leurs directions longitudinales. De façon similaire, les extrémités de l'arêtier de rive 160 sont usinées selon une ligne de coupe inclinée sur la direction longitudinale des arêtiers. Par ailleurs, pour autoriser un appui correct de la surface inférieure 163 de l'arêtier de rive d'une parte sur l'aile 552 de la structure ajustable à pivotement d'autre part sur le cheneau porteur 300, le bourrelet 154 est éliminé en correspondance, à chacune des extrémités de l'arêtier de rive 160.

Les montants 200, la structure ajustable à pivotement 500 et le cheneau porteur 300 étant assemblés, l'ensemble profilé-support 120 et arêtier de rive 160, en position d'engagement comme représenté figure 3C ou figure 4C est positionné en partie haute des montants 200, entre ceux-ci et assemblé par exemple à l'aide d'embouts de jonction. L'angle de positionnement du profilé support 120 par rapport à l'horizontale est défini en fonction de la déclivité de la toiture considérée dans un plan vertical délimité par le bord latéral de la toiture. On rappelle que en considérant les notations de la figure 2 la déclivité $\beta_1$ est définie par la relation

$$\beta_1 = arctg \ (tg \ \beta \ cos \ \alpha)$$

Il convient pour disposer la surface supérieure 168 de l'arêtier de rive dans le plan défini par l'aile 552 d'appui de la structure ajustable à pivotement d'une part et par l'arête 311 du cheneau porteur d'autre part d'incliner le voile 161 sur l'horizontale grâce au pivotement autorisé par le bourrelet 164 et le logement complémentaire 128, en fonction d'une part de la pente de la toiture et d'autre part de l'inclinaison de l'arêtier de rive par rapport à la ligne de pente de la toiture. Le voile 161 repose alors correctement, par un contact plan, sur l'aile 152 de la structure ajustable à pivotement et d'autre part, par un contact linéique sur l'arête 311 du cheneau porteur.

De ce fait, les chevrons 400 reposant par leur extrémité supérieure sur l'aile 552 de la structure ajustable à pivotement et par leur extrémité inférieure sur l'arêtier de rive auront un contact plan sur la surface 168 du voile 161. L'installation des chevrons 400 est ainsi nettement simplifiée par rapport aux réalisations antérieures, il en est de même en particulier pour la pose des panneaux complétant la toiture.

On notera en paticulier que le système maintenant proposé par la présente invention présente les avantages suivants. Le système autorise une installation aisée quelle que soit l'inclination de l'arêtier de rive par rapport à la ligne de pente de la toiture, cette inclination étant susceptible de varier entre –90° et +90°. Par ailleurs le système est adaptable à toutes les pentes β de la toiture. La totalité des usinages des profilés peut être réalisée en atelier. En raison des structures (169) prévues sur l'arêtier de rive, complémentaires notamment des chevrons, l'étanchéité de l'ensemble peut être aisément réalisée à l'aide de joints classiques.

De même, des accessoires ou structures quelconques peuvent aisément être disposé en dessous du profilé support associé à l'arêtier de rive.

Bien entendu, la présente invention ne doit pas être considérée comme étant limitée aux modes de réalisation qui viennent d'être décrits, mais est determinée par la teneur des revendications. En particulier, on notera que la structure porteuse conforme à l'invention autorise une pose toute aussi aisée et précise lorsque la façade d'appui FAC n'est pas verticale, ou encore n'est pas parallèle à la ligne de niveau de la toiture.

De même, la presente invention s'applique tout particulièrement au cas où l'arêtier de rive est formé de différentes sections rectilignes inclinées entre elles, et délimitées par des montants 200.

En effet, dans un tel cas, l'inclinaison γ de l'arêtier de rive 160, par rapport à l'horizontale doit varier d'une section à l'autre, puisque l'inclinaison de l'arêtier de rive par rapport à la ligne de pente varie d'une section à l'autre. Grâce à l'invention, l'assemblage d'une telle installation ne pose aucun problème particulier.

En outre, on remarquera que si dans le cas précédemment décrit les parois latérales LAT sont parfaitement verticales, la présente invention s'applique sans aucune difficulté au cas où les parois latérales LAT sont inclinées sur la verticale, que celles-ci soient formées d'un pan unique ou non.

De préférence, tous les profilés sont réalisés en alliage d'aluminium.

Par ailleurs bien que cette disposition ne soit pas représentée sur les figures, de préférence, le système est complété par un cheneau latéral, de section similaire au cheneau 300 précité, s'étendant parallèlement à l'arêtier de rive pour récupérer les eaux de pluie sur les parties latérales.

**Revendications**

1. Structure porteuse, formant arêtier de rive, par une charpente de toiture, caractérisé par le fait qu'elle comprend en combinaison:

un profilé support (120; $120_A$, $120_B$) équipé d'un premier élément longitudinal d'articulation (127, 128) et adapté pour être fixé à des montants (200) supportant la charpente, selon une inclinaison par rapport à l'horizontale qui correspond à la déclivité ($\beta_1$) de la toiture considérée sensiblement dans un plan vertical délimité par le bord latéral de la toiture,

un arêtier de rive (160) constitué d'un profilé comprenant:

un voile (161) généralement plan muni sur sa surface inférieur (163)

d'un second élément longitudinal d'articulation (164) adapté pour venir en engagement avec le premier élément d'articulation (127, 128) afin de permettre une inclinaison du voile (161) de l'arêtier de rive (160) par rapport à l'horizontale en fonction d'une part de la pente ($\beta$) de la toiture et d'autre part de l'inclinaison ($\alpha$) de l'arêtier de rive par rapport à la ligne de pente de la toiture, de telle sorte que ledit voile (161) soit parallèle au plan de la toiture adjacente de l'arêtier de rive.

2. Structure porteuse selon la revendication 1, comportant au moins deux montants (200) portant le profilé support (120) caractérisée par le fait que chaque montant (200) est composé de deux profilés (210, 250) articulés autour d'un axe parallèle à la direction des montants (200) de telle sorte que l'un des éléments (250) de chaque montant délimite une face d'appui (251) pour le profilé support (120) qui est orientée transversalement à la direction longitudinale de l'arêtier.

3. Structure porteuse selon l'une des revendications 1 ou 2, caractérisé par le fait que l'un des deux éléments longitudinaux d'articulation (127, 128; 164) comprend un organe profilé comportant un bourrelet (164) de contour externe généralement convexe avec un resserrement au niveau duquel son épaisseur hors-tout, en section droite, est minimale et l'autre élément d'articulation comprend un logement (128) en creux à bords convergents, l'orifice ménagé entre ces bords permettant l'introduction du bourrelet (164) présenté sensiblement selon son épaisseur minimale dans une position dite d'introduction, tandis qu'après pivotement en position dite de travail le bourrelet (164) est prisonnier dans le logement (128), et susceptible d'un pivotement relatif à l'égard de ce logement.

4. Structure porteuse selon la revendication 3, caractérisé par le fait que le bourrelet (164) des éléments d'articulation est muni d'un orifice axial (165) aptes à recevoir une vis.

5. Structure porteuse selon l'une des revendications 1 à 4, caractérisé par le fait que le voile (161) de l'arêtier de rive (160) porte sur sa surface supérieure (168) une rainure (169) à bords convergents.

6. Structure porteuse selon l'une des revendications 1 à 5, caractérisée par le fait que le profilé support (120) est constitué en combinaison d'un longeron support (120A) de section générale quadrangulaire et d'un profilé (120B) sensiblement plan destiné à être fixé sur celui-ci, et qui est muni dudit premier élément longitudinal d'articulation ($127_B$, $128_B$).

7. Structure porteuse selon la revendication 6, caractérisée par le fait que le longeron support ($120_A$) possède un voile supérieur ($123_A$) muni d'une rainure (134A) en queue d'aronde, à bords convergents, ouverte vers le haut après installation.

8. Structure porteuse selon l'une des revendications 1 à 7, caractérisée par le fait que le profilé support (120) comprenant le cas échéant un longeron ($120_A$) possède un voile inférieur (124, $124_A$) muni d'une rainure (126, $126_A$) en queue d'aronde à bords convergents, ouverte vers le bas après installation.

9. Structure porteuse selon l'une des revendications 1 à 8, caractérisée par le fait que le profilé support (120) et l'arêtier de rive (160) comprennent des ailes respectives (129, 167) en forme de secteur de cylindre en contact mutuel.

10. Structure poteuse selon l'une des revendications 1 à 9, caractérisée par le fait que l'inclinaison ($\beta_1$) du profilé support par rapport à l'horizontale considérée dans sa direction longitudinale est donnée par la relation:

$$\beta_1 = \text{arctg (tg } \beta \text{ cos } \alpha)$$

et l'inclinaison $\gamma$ sur l'horizontale du voile de l'arêtier de rive considéré dans la direction transversale, dans un plan perpendiculaire audit voile, est donnée par la relation:

$$\gamma = \text{arctg [tg } \alpha \text{ sin arctg (tg } \beta \text{ cos } \alpha)]$$

relations dans lesquelles $\beta$ désigne la pente de la toiture par rapport à l'horizontale et $\alpha$ l'inclinaison de la projection sur l'horizontale de l'arêtier de rive par rapport à la projection sur l'horizontale de ligne de pente de la toiture.

**Patentansprüche**

1. Tragekonstruktion zur Bildung eines Ecksparrens für ein Dachgerüst, dadurch gekennzeichnet, dass sie in Kombination folgendes aufweist:

ein Stützprofil (120; $120_A$, $120_B$) ausgerüstet mit einem ersten langgestreckten Gelenkteil (127, 128), das an das Dachgerüst abstützende Pfosten (200) mit einer Neigung zur Horizontalen befestigt werden kann, welche der Dachschräge ($\beta_1$) entspricht, die als weitgehend in einer vertikalen Ebene liegend angenommen wird, die von der Seitenkante des Daches begrenzt wird,

einen Ecksparren (160), der aus einem Profil gebildet ist, das folgendes aufweist:

eine weitgehend flache Abdeckung (161), die an ihrer Unterseite (163) mit folgendem versehen ist:

einem zweiten langgestreckten Gelenkteil (164), das mit dem ersten Gelenkteil (127, 128) in Eingriff treten kann, um eine Neigung der Abdeckung (161) des Ecksparrens (160) im Vergleich zur Horizontalen in Abhängigkeit einerseits von der Dachneigung ($\beta$) und andererseits der Neigung ($\alpha$) des Ecksparrens im Vergleich zur Neigungslinie des Daches zu erlauben, damit die Abdeckung (161) parallel zur Dachebene an dem Ecksparren verläuft.

2. Tragekonstruktion nach Anspruch 1, die mindestens zwei Pfosten (200) aufweist, welche das Stützprofil (120) abstützen, dadurch gekennzeichnet, dass jeder Pfosten (200) aus zwei Profilen (210, 250) besteht, die um eine Achse angelenkt sind, die parallel zur Richtung der Pfosten (200) verläuft, so dass eines der Elemente (250) jeden Pfostens eine Auflagefläche (251) für das Stützprofil (120) begrenzt, welche quer zur Längsrichtung des Ecksparrens ausgerichtet ist.

3. Tragekonstruktion nach einem der Ansprüche 1 oder 2, dadurch gekennzeichnet, dass eines der beiden langgestreckten Gelenkteile (127, 128; 164) ein Profil mit einer Verdickung (164) mit weitgehend konvexer Aussenseite und einer Einschnürung aufweist, an der ihre Gesamtdicke einen minimalen Querschnitt hat, und dass das andere Gelenkteil eine hohle Aufnahme (128) mit konvergierenden Rändern aufweist, wobei die zwischen diesen Rändern vorgesehene Öffnung das Einschieben der Verdickung (164) erlaubt, welche sich entlang ihrer Mindestdicke in einer sogenannten Einschiebeposition präsentiert, während nach Einkippen in die sogenannte Funktionsposition der Verdickung die Verdickung (164) in der Aufnahme (128) festgehalten wird und im Vergleich zu dieser Aufnahme eine relative Kippbewegung durchführen kann.

4. Tragekonstruktion nach Anspruch 3, dadurch gekennzeichnet, dass die Verdickung (164) der Gelenkteile mit einer axialen Öffnung (165) versehen ist, die eine Schraube aufnehmen kann.

5. Tragekonstruktion nach einem der Ansprüche 1 bis 4, dadurch gekennzeichnet, dass die Abdeckung (161) des Ecksparrens (160) an ihrer Oberfläche (168) eine Nut (169) mit konvergierenden Rändern aufweist.

6. Tragekonstruktion nach einem der Ansprüche 1 bis 5, dadurch gekennzeichnet, dass das Stützprofil (120) in Kombination aus einem Längsträger (120$_A$) mit allgemein viereckigem Querschnitt und einem weitgehend flachen Profil (120$_B$) besteht, das an letzterem befestigt wird und das mit dem ersten langgestreckten Gelenkteil (127$_B$, 128$_B$) ausgerüstet ist.

7. Tragekonstruktion nach Anspruch 6, dadurch gekennzeichnet, dass der Längsträger (120$_A$) eine obere Abdeckung (123$_A$) aufweist, in die eine schwalbenschwanzförmige Nut (134$_A$) mit konvergierenden Kanten eingebracht ist, die nach Einbau nach oben offen ist.

8. Tragekonstruktion nach einem der Ansprüche 1 bis 7, dadurch gekennzeichnet, dass das eventuell einen Längsträger (120$_A$) aufweisende Stützprofil (120) eine untere Abdeckung (124, 124$_A$) aufweist, in die eine schwalbenschwanzförmige Nut (126, 126$_A$) mit konvergierenden Kanten eingebracht ist, die nach Einbau nach unten offen ist.

9. Tragekonstruktion nach einem der Ansprüche 1 bis 8, dadurch gekennzeichnet, dass das Stützprofil (120) und der Ecksparren (160) jeweils Flügel (129, 167) mit zylindrischem Profil aufweisen, die in gegenseitiger Berührung stehen.

10. Tragekonstruktion nach einem der Ansprüche 1 bis 9, dadurch gekennzeichnet, dass in Längsrichtung gesehen die Neigung (β$_1$) des Stützprofils

zur Horizontalen durch folgende Gleichung bestimmt ist:

$$\beta_1 = \text{arctg (tg } \beta \cos \alpha)$$

und dass in Querrichtung gesehen die Neigung γ zur Horizontalen der Abdeckung des Ecksparrens in einer zu der Abdeckung rechtwinkligen Ebene durch folgende Gleichung bestimmt ist:

$$\gamma = \text{arctg [tg } \alpha \sin \text{ arctg (tg } \beta \cos \alpha)]$$

wobei in diesen Gleichungen β die Neigung des Daches im Vergleich zur Horizontalen bezeichnet, während α die Neigung der Projektion auf die Horizontale des Ecksparrens im Vergleich zur Projektion auf die Horizontale der Neigungslinie des Daches angibt.

## Claims

1. Supporting structure, forming an angle ridge, for a roof framework, characterized in that it comprises in combination:

a profiled support section (120; 120$_A$, 120$_B$) equipped with a first longitudinal articulation element (127, 128) and adapted to be fixed to stanchions (200) supporting the framework, at an inclination in relation to the horizontal which corresponds to the declivity (β$_1$) of the roof considered substantially in a vertical plane delimited by the lateral edge of the roof,

an angle ridge (160) formed by a profiled section comprising:

a generally plane shell (161) provided on its lower surface (163)

with a second longitudinal articulation element (164) adapted to come into engagement with the first articulation element (127, 128) in order to permit an inclination of the shell (161) of the angle ridge (160) in relation to the horizontal as a function, on the one hand, of the slope (β of the roof and, on the other hand, of the inclination (α) of the angle ridge in relation to the line of slope of the roof, in such a manner that the said shell (161) is parallel to the plane of the roof adjacent to the angle ridge.

2. Supporting structure according to claim 1, comprising at least two stanchions (200) carrying the profiled support section (120), characterized in that each stanchion (200) is comprised of two profiled sections (200, 250) articulated about an axis parallel to the direction of the stanchions (200) in such a manner that one of the elements (250) of each stanchion delimits a bearing surface (251) for the profiled support section (120), which bearing surface is oriented transversely to the longitudinal direction of the ridge.

3. Supporting structure according to one of claims 1 or 2, characterized in that one of the two longitudinal articulation elements (127, 128; 164) comprises a profiled member comprising an elargement (164) of external contour which is generally convex with a narrowing at the location of which its overall thickness, in cross-section, is a minimum and the other articulation element comprises a hollow emplacement (128) with converging edges, the orifice formed between these edges permitting the introduction of the enlargement (164) presented substantially according to its minimum width into a position referred to as an introduction position, while, after pivoting into a position referred to as a working position, the enlargement (164) is captive in the emplacement (128), and capable of a relative pivoting in relation to this emplacement.

4. Supporting structure according to claim 3, characterized in that the enlargement (164) of the articulation elements is provided with an axial orifice (165) capable of receiving a screw.

5. Supporting structure according to one of claims 1 to 4, characterized in that the shell (161) of the angle ridge (160) carries on its upper surface (168) a groove (169) having convergent edges.

6. Supporting structure according to one of claims 1 to 5, characterized in that the profiled support section (120) is constituted, in combination, by a supporting joist (120$_A$) of rectangular general section and by a substantially plane profiled section (120$_B$) intended to be fixed on the latter, and which is provided with the said first longitudinal articulation element (127$_B$, 128$_B$).

7. Supporting structure according to claim 6, characterized in that the supporting joist (120A) possesses an upper shell (123$_A$) provided with a dovetail groove (134$_A$), which has converging edges and which is open upwardly after installation.

8. Supporting structure according to one of claims 1 to 7, characterized in that, the profiled support section (120) comprising, where appropriate, a joist (120$_A$), possesses a lower shell (124, 124$_A$) provided with a dovetail groove (126, 126$_A$), which has converging edges and which is open downwardly after installation.

9. Supporting structure according to one of claims 1 to 8, characterized in that the profiled support section (120) and the angle ridge (160) comprise respective wings (129, 167) in the form of a sector of a cylinder in mutual contact.

10. Supporting structure according to one of claims 1 to 9, characterized in that the inclination ($\beta_1$) of the profiled support section in relation to the horizontal, considered in its longitudinal direction, is given by the relation:

$$\beta_1 = \text{arc tan } (\tan \beta \cos \alpha)$$

and the inclination $\gamma$, in relation to the horizontal, of the shell of the angle ridge, considered in its transverse direction, in a plane perpendicular to the said shell, is given by the relation:

$$\gamma = \text{arc tan } [\tan \alpha \sin \text{ arc tan } (\tan \beta \cos \alpha)]$$

these being relations in which $\beta$ designates the slope of the roof in relation to the horizontal and $\alpha$ designates the inclination of the projection, onto the horizontal, of the angle ridge in relation to the projection, onto the horizontal, of the line of slope of the roof.

FIG.1A

FIG.1B

FIG.2

FIG. 3A

FIG. 4A

FIG. 3B

FIG. 4B

FIG. 3C

FIG. 4C

FIG.5

FIG.6